# EUROPEAN PATENT APPLICATION

(11) **EP 4 822 348 A1**
(43) Date of publication of application: **14.10.2026**
(21) Application number: 24900315.3
(22) Date of filing: 23.10.2024
(51) Int. Cl.: G01N 31/00

(54) **SYSTEM FOR EVALUATING CARBON DIOXIDE FIXATION AMOUNT AND METHOD FOR EVALUATING CARBON DIOXIDE FIXATION AMOUNT**

(30) Priority: 06.12.2023 JP 2023206153
(71) Applicant: Sumitomo Heavy Industries, Ltd., Tokyo 141-6025 (JP)
(72) Inventor: HIRATA Kazuhiro, Yokosuka-shi, Kanagawa 237-8555 (JP)
(74) Representative: Louis Pöhlau Lohrentz
(86) International application number: PCT/JP2024/037683
(87) International publication number: WO 2025/121019

(57) **Abstract**

An object of the present invention is to provide a system for evaluating a carbon dioxide fixation amount and a method for evaluating a carbon dioxide fixation amount, with which it is possible, in fixation of carbon dioxide by a carbonate precipitation reaction, to simply quantify an amount of fixed carbon dioxide without an operation relating to crystal growth and to appropriately evaluate the carbon dioxide fixation amount.

In order to solve the problem, provided are a system for evaluating a carbon dioxide fixation amount, including a reaction unit configured to carry out a carbonate precipitation reaction relating to fixation of carbon dioxide under conditions under which calcium carbonate preferentially precipitates, a first measurement unit and a second measurement unit configured to measure calcium ion concentrations before and after the reaction, and a calculation unit configured to quantify an amount of fixed carbon dioxide based on measurement results of the first measurement unit and the second measurement unit; and a method for evaluating the carbon dioxide fixation amount.

According to the present invention, simple quantification and appropriate evaluation of the carbon dioxide fixation amount can be achieved without performing an operation relating to crystal growth.

## Description

### Technical Field

The present invention relates to a system for evaluating a carbon dioxide fixation amount and a method for evaluating a carbon dioxide fixation amount. More specifically, the present invention relates to a system for evaluating a carbon dioxide fixation amount and a method for evaluating a carbon dioxide fixation amount, for quantifying an amount of carbon dioxide fixed as a carbonate.

### Background Art

In recent years, suppressing emission of carbon dioxide into the environment, the carbon dioxide being considered to have a significant impact on environmental problems such as global warming, has become an issue to be urgently addressed. In response to the issue, research has been conducted on technologies for reducing the amount of carbon dioxide emissions themselves and on technologies for recovering and fixing emitted carbon dioxide.

In particular, various methods have been studied as technologies relating to recovery and fixation of carbon dioxide. For example, as a method for recovering the carbon dioxide from a carbon dioxide-containing gas, a chemical absorption method in which the carbon dioxide is dissolved in an absorption liquid such as monoethanolamine, a physical adsorption method in which the carbon dioxide is adsorbed by an adsorbent having gas adsorption capability, a membrane separation method using a membrane, and the like have been known.

In addition to these methods, a carbonate fixation method in which the carbon dioxide is converted into a carbonate by a chemical reaction has been known. Here, divalent metal ions are known as components that react with the carbon dioxide to form the carbonate.

For example, PTL1 discloses a method for fixing carbon dioxide, in which carbon dioxide is supplied to an aqueous solution in which a specific blast furnace slag and an alkali are mixed, and calcium eluted from the blast furnace slag is reacted with the carbon dioxide to generate a carbonate.

### Citation List

### Patent Literature

[PTL 1] Japanese Unexamined Patent Publication No. 2017-214262

### Summary of Invention

### Technical Problem

The carbonate fixation method has an advantage in that, because the reaction relating to carbonate precipitation proceeds spontaneously, there is no need to externally supply energy for fixation of carbon dioxide, and the generated carbonate can also be stably stored for a long period of time.

Meanwhile, in efforts relating to suppression of emission of carbon dioxide into the environment, that is, so-called decarbonization, attention has been focused not only on chemical suppression of carbon dioxide emission, such as recovery and fixation of carbon dioxide, but also on an approach (carbon pricing) that promotes suppression of carbon dioxide emission by assigning a price (taxation) to emitted carbon dioxide or by certifying and trading the value of carbon dioxide reduction. In applying the carbon pricing, information as to how much emission of carbon dioxide has been suppressed is required. In other words, it is necessary to quantify and evaluate how much carbon dioxide has been fixed.

Here, as disclosed in PTL1, in the case of the carbonate fixation method in which a carbonate is generated by reacting divalent metal ions with carbon dioxide, evaluation relating to the carbon dioxide fixation amount has conventionally been performed by recovering all of the generated carbonate as a solid content and measuring the recovered amount. That is, since the carbon dioxide fixation amount cannot be evaluated unless the carbonate can be recovered as a solid content and its weight can be measured, it becomes necessary to grow crystals of the carbonate such that the generated carbonate can be recovered as a solid content. However, as the fixation of carbon dioxide proceeds, there arises a problem in that the cost associated with the use of chemicals required to promote the crystal growth of the carbonate until the carbonate becomes recoverable and the time required for the crystal growth increase, thereby increasing a work burden relating to the evaluation of the carbon dioxide fixation amount.

Accordingly, an object of the present invention is to provide a system for evaluating a carbon dioxide fixation amount and a method for evaluating a carbon dioxide fixation amount, with which it is possible, in fixation of carbon dioxide by a carbonate precipitation reaction, to simply quantify an amount of fixed carbon dioxide without an operation relating to crystal growth and to appropriately evaluate the carbon dioxide fixation amount.

### Solution to Problem

As a result of intensive studies on the above-described problem, the present inventors completed the present invention by finding that, by carrying out a carbonate precipitation reaction relating to fixation of carbon dioxide under specific conditions and determining the amount of fixed carbon dioxide based on calcium ion concentrations before and after the reaction, simple quantification of the amount of fixed carbon dioxide and appropriate evaluation of the carbon dioxide fixation amount can be achieved without performing an operation relating to crystal growth.

That is, the present invention provides the following system for evaluating a carbon dioxide fixation amount and method for evaluating a carbon dioxide fixation amount.

In order to solve the above-described problem, a system for evaluating a carbon dioxide fixation amount of the present invention includes: a reaction unit configured to carry out a carbonate precipitation reaction relating to fixation of carbon dioxide under conditions under which calcium carbonate preferentially precipitates; a first measurement unit configured to measure a calcium ion concentration before the reaction; a second measurement unit configured to measure a calcium ion concentration after the reaction; and a calculation unit configured to quantify an amount of fixed carbon dioxide based on measurement results of the first measurement unit and the second measurement unit.

According to the system for evaluating a carbon dioxide fixation amount of the present invention, by preferentially precipitating a specific carbonate (calcium carbonate) as the carbonate generated by the carbonate precipitation reaction, a variation in metal ion (calcium ion) concentrations before and after the reaction correlates with an amount of generated carbonate, and further, the amount of generated carbonate can be converted into the carbon dioxide fixation amount. Therefore, simple quantification of the amount of fixed carbon dioxide and appropriate evaluation of the carbon dioxide fixation amount can be achieved without performing an operation relating to crystal growth. In addition, it is possible to reduce a cost associated with the use of chemicals and shorten a time required for the crystal growth of the carbonate, thereby reducing a work burden relating to the evaluation of the carbon dioxide fixation amount.

In addition, as one embodiment of the system for evaluating a carbon dioxide fixation amount of the present invention, in the reaction unit, the carbonate precipitation reaction is carried out at a pH of 10.5 or less.

A solubility, which is an index indicating ease of precipitation of the carbonate generated by the reaction between the divalent metal ions and the carbon dioxide, depends on pH. By comparing the pH dependence of the solubility of various carbonates and hydroxides, the present inventors have found that there is a pH range in which the calcium carbonate preferentially precipitates.

According to the system for evaluating a carbon dioxide fixation amount, even in a case where a plurality of divalent metal ions are present, the calcium carbonate can be preferentially precipitated. As a result, it is possible to reduce a cost for preparation and procurement of a solution that can be used as a divalent metal ion source in the carbonate precipitation.

Furthermore, as one embodiment of the system for evaluating a carbon dioxide fixation amount of the present invention, the reaction unit includes a concentration unit configured to generate a concentrated solution by osmosis using a semipermeable membrane, and the second measurement unit measures at least a calcium ion concentration on a concentrated solution side.

In general, in the carbonate precipitation, an operation of reacting divalent metal ions and carbon dioxide in a solution and concentrating the solution to promote the precipitation of the carbonate is performed.

According to the system for evaluating a carbon dioxide fixation amount, since the concentration is performed by osmosis using a semipermeable membrane, the carbonate precipitation reaction can proceed to obtain the carbonate with less energy, compared to a case where the solution is concentrated by heating and evaporation. In addition, since the concentrated solution obtained by using the semipermeable membrane is a product after the carbonate precipitation reaction has proceeded, the calcium ion concentration after the reaction can be accurately and easily identified by measuring the calcium ion concentration contained in the concentrated solution. As a result, the accuracy of quantification of the amount of fixed carbon dioxide is also improved, enabling a more appropriate evaluation.

In order to solve the above-described problem, a method for evaluating a carbon dioxide fixation amount of the present invention includes: a reaction step of carrying out a carbonate precipitation reaction relating to fixation of carbon dioxide under conditions under which calcium carbonate preferentially precipitates; a first measurement step of measuring a calcium ion concentration before the reaction; a second measurement step of measuring a calcium ion concentration after the reaction; and a calculation step of quantifying an amount of fixed carbon dioxide based on measurement results of the first measurement step and the second measurement step.

According to the method for evaluating a carbon dioxide fixation amount of the present invention, the carbon dioxide fixation amount can be determined by preferentially precipitating a specific carbonate (calcium carbonate) as the carbonate generated by the carbonate precipitation reaction and observing the variation in the metal ion (calcium ion) concentrations before and after the reaction. Therefore, simple quantification of the amount of fixed carbon dioxide and appropriate evaluation of the carbon dioxide fixation amount can be achieved without performing an operation relating to crystal growth. In addition, it is possible to reduce a cost associated with the use of chemicals and shorten a time required for the crystal growth of the carbonate, thereby reducing a work burden relating to the evaluation of the carbon dioxide fixation amount.

### Advantageous Effects of Invention

According to the present invention, it is possible to provide a system for evaluating a carbon dioxide fixation amount and a method for evaluating a carbon dioxide fixation amount, with which it is possible, in fixation of carbon dioxide by a carbonate precipitation reaction, to simply quantify an amount of fixed carbon dioxide without an operation relating to crystal growth and to appropriately evaluate the carbon dioxide fixation amount.

### Brief Description of Drawings

FIG. 1 is a schematic explanatory diagram showing an example of an aspect of a system for evaluating a carbon dioxide fixation amount according to a first embodiment of the present invention.
FIG. 2 is a graph showing pH dependence of an abundance ratio of each form of carbon dioxide (carbonic acid, hydrogen carbonate ion, and carbonate ion) in an aqueous solution.
FIG. 3 is a graph showing a relationship between a pH of an aqueous solution and a solubility (logarithmic) of carbonates and hydroxides generated from divalent metal ions (calcium ions and magnesium ions).
FIG. 4 is a schematic explanatory diagram showing an example of another aspect of the system for evaluating a carbon dioxide fixation amount according to the first embodiment of the present invention.
FIG. 5 is a schematic explanatory diagram showing an example of an aspect of a system for evaluating a carbon dioxide fixation amount according to a second embodiment of the present invention.

### Description of Embodiments

The system for evaluating a carbon dioxide fixation amount and the method for evaluating a carbon dioxide fixation amount of the present invention perform an evaluation of the carbon dioxide fixation amount by acquiring information relating to how much carbon dioxide can be fixed in fixation of carbon dioxide by a carbonate precipitation reaction, that is, by performing quantification of the carbon dioxide fixation amount.

In addition, the system for evaluating a carbon dioxide fixation amount and the method for evaluating a carbon dioxide fixation amount of the present invention enable the evaluation of the carbon dioxide fixation amount without recovering the carbonate generated by the carbonate precipitation reaction, and there is no need to perform an operation of growing crystals of the carbonate so that the carbonate becomes recoverable.

In the present invention, "carbon dioxide" includes carbon dioxide in a gaseous state (CO₂), as well as carbonic acid (H₂CO₃), hydrogen carbonate ions (HCO₃⁻), and carbonate ions (CO₃²⁻) in an aqueous solution. Hereinafter, when specifically referring to the carbon dioxide in a gaseous state, it is expressed as "carbon dioxide gas".

Hereinafter, embodiments of the system for evaluating a carbon dioxide fixation amount according to the present invention will be described in detail. In addition, the description of the method for evaluating a carbon dioxide fixation amount according to the present invention shall be replaced with the description for the operation of the system for evaluating a carbon dioxide fixation amount according to the present invention.

The system for evaluating a carbon dioxide fixation amount and the method for evaluating a carbon dioxide fixation amount described in the embodiments are merely examples for explaining the system for evaluating a carbon dioxide fixation amount and the method for evaluating a carbon dioxide fixation amount according to the present invention, and are not limited thereto.

### [First Embodiment]

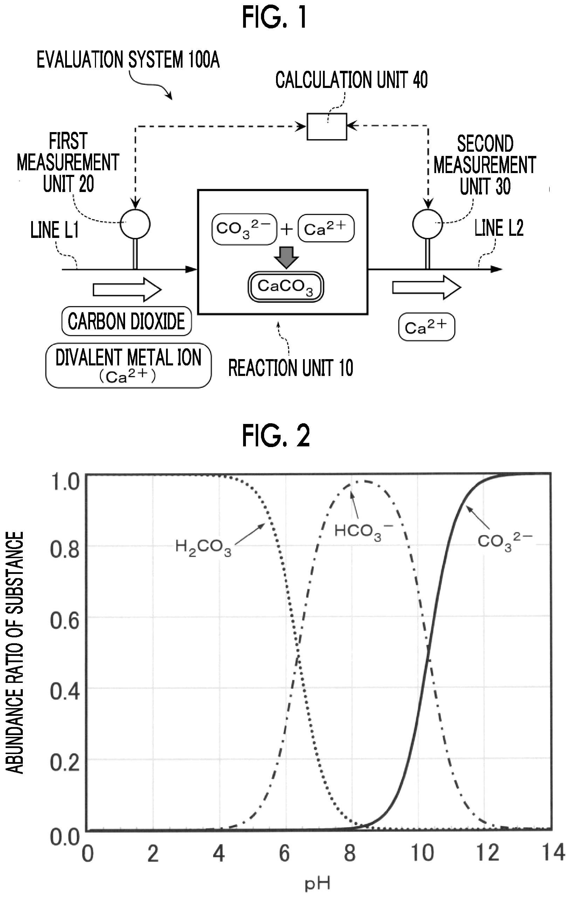

FIG. 1 is a schematic explanatory diagram showing a system for evaluating a carbon dioxide fixation amount according to a first embodiment of the present invention.

As shown in FIG. 1, a system 100A for evaluating a carbon dioxide fixation amount (hereinafter also simply referred to as "evaluation system 100A") according to the present embodiment includes a reaction unit 10, a first measurement unit 20, a second measurement unit 30, and a calculation unit 40. Dashed arrows in FIG. 1 indicate that the respective components are connected so as to allow input and output.

Hereinafter, each component of the evaluation system 100A will be described.

The reaction unit 10 is for carrying out a carbonate precipitation reaction relating to fixation of carbon dioxide, and further for carrying out the carbonate precipitation reaction under conditions under which calcium carbonate preferentially precipitates.

The reaction unit 10 is not particularly limited as long as it can react carbon dioxide with divalent metal ions that react with carbon dioxide to generate a carbonate, and precipitate the carbonate under conditions under which calcium carbonate preferentially precipitates; and specific means and a device structure relating to the reaction unit 10 are not particularly limited.

In the reaction unit 10 of the present embodiment, as shown in FIG. 1, carbon dioxide and divalent metal ions (including calcium ions) are introduced through a line L1, and carbonate ions, which are one form of the carbon dioxide in an aqueous solution, are reacted with calcium ions to generate calcium carbonate; and the calcium carbonate precipitates as crystals. Excess calcium ions not used for the carbonate generation (carbonate precipitation) are discharged through a line L2.

Here, regarding the carbon dioxide and the divalent metal ions (calcium ions) introduced through the line L1, there is no particular limitation on their origin as long as they can be in a form of an aqueous solution in which the carbonate ions and the divalent metal ions (calcium ions) are present in the reaction unit 10. For example, as the carbon dioxide introduced through the line L1, it may be introduced as it is as carbon dioxide gas, or an aqueous solution in which the carbon dioxide gas is artificially dissolved or a solution in which the carbon dioxide is dissolved from the beginning may be used. In addition, as the divalent metal ions introduced through the line L1, an aqueous solution in which a substance that becomes the divalent metal ions (calcium ions) is artificially dissolved or a solution in which the divalent metal ions (calcium ions) are dissolved from the beginning may be used. Examples of the solution in which the carbon dioxide and the divalent metal ions are dissolved from the beginning include seawater, river water, tap water, pure water, drainage/wastewater from factories, and leachate from landfills.

Examples of the reaction unit 10 in the present embodiment include one having a tank (reaction tank) capable of storing an aqueous solution, in which a carbonate precipitation reaction is carried out by introducing carbon dioxide gas and an aqueous solution containing divalent metal ions into the reaction tank, or by introducing an aqueous solution in which carbon dioxide and divalent metal ions are dissolved in advance.

Here, examples of means for promoting the carbonate precipitation reaction in the reaction unit 10 include concentrating the aqueous solution in the reaction tank and adjusting a pH.

In addition, a carbonate precipitation reaction that is not accompanied by concentration of the aqueous solution may be caused to proceed by introducing carbon dioxide gas or the like as fine bubbles (such as microbubbles) into the aqueous solution contained in the reaction tank, thereby forming an extremely small gas-liquid interfacial reaction field. More specifically, for example, in a case of a reaction tank containing an aqueous solution in which carbon dioxide and divalent metal ions are dissolved in advance, the type of gas introduced as the fine bubbles is not particularly limited as long as the gas is capable of forming an extremely small gas-liquid interfacial reaction field between carbonate ions and calcium ions. Moreover, in a case of a reaction tank containing an aqueous solution containing divalent metal ions, carbon dioxide gas may be introduced as the fine bubbles. In this case, the carbon dioxide gas introduced as the fine bubbles functions as a carbon dioxide source in the carbonate precipitation reaction together with the formation of the extremely small gas-liquid interfacial reaction field.

One specific example of the reaction unit 10 will be described in detail later as another embodiment.

Regarding the conditions under which calcium carbonate preferentially precipitates in the reaction unit 10, for example, an aqueous solution containing only calcium ions may be used as the aqueous solution containing divalent metal ions used in the reaction unit 10. As a result, the carbonate precipitated in the reaction unit 10 naturally becomes only calcium carbonate.

In addition, as another reaction condition in the reaction unit 10, the pH may be set to 10.5 or less.

When multiple carbonates can be generated, the solubility of a given carbonate can be used as an index for determining whether that carbonate preferentially precipitates. Specifically, among carbonates generated under the same conditions, one having a lower solubility is likely to precipitate as a crystal, that is, it preferentially precipitates.

By comparing the pH dependence of the solubility of various carbonates and hydroxides, the present inventors have found that there is a pH range in which the solubility of calcium carbonate is lower than that of other carbonates and hydroxides, that is, a pH range serving as a condition under which calcium carbonate preferentially precipitates.

Hereinafter, a derivation process relating to the pH range serving as the condition under which calcium carbonate preferentially precipitates will be described.

First, regarding carbon dioxide dissolved in an aqueous solution, a chemical equilibrium as shown in Expression 1 is established.
[Expression 1] ${CO}_{2} + {H}_{2} O ⇄ {H}_{2} {CO}_{3} ⇄ {{HCO}_{3}}^{-} + {H}^{+} ⇄ {{CO}_{3}}^{2 -} + 2 {H}^{+}$ (Expression 1)

As shown in Expression 1, by dissolving carbon dioxide gas (CO₂) in water (H₂O), carbonic acid (H₂CO₃) is generated, and a part of the carbonic acid ionizes into a hydrogen ion (H⁺) and a hydrogen carbonate ion (HCO₃⁻). By further ionizing the hydrogen ion from the hydrogen carbonate ion, a carbonate ion (CO₃²⁻) is generated.

An advancing direction in which the reaction proceeds in this chemical equilibrium (that is, the direction in which the equilibrium is shifted) depends on a pH of the aqueous solution.

FIG. 2 is a graph showing the pH dependence relating to the abundance ratio of each form of the carbon dioxide (carbonic acid, hydrogen carbonate ion, and carbonate ion) in the aqueous solution.

As can be seen from FIG. 2, the abundance ratio of the carbonate ion (CO₃²⁻) can be increased by making the pH higher than a neutral region.

On the other hand, regarding a solubility of a compound, it can be determined from a solubility product Kₛₚ, which is a characteristic value for each individual substance.

For example, a relationship between the solubility product Kₛₚ and a solubility Cs of a carbonate composed of a divalent metal ion (M²⁺) and a carbonate ion (CO₃²⁻) is expressed by Expressions 2 to 4. α is a fraction of carbonate ions with respect to the total carbon dioxide concentration in the aqueous solution.
[Expression 2] ${K}_{sp} = \left[{M}^{2 +}\right] \left[{{CO}_{3}}^{2 -}\right] = Cs \times αCs$ (Expression 2)
[Expression 3] $α = \frac{\left[{{CO}_{3}}^{2 -}\right]}{\left[{H}_{2}{CO}_{3}\right] + \left[{{HCO}_{3}}^{-}\right] + \left[{{CO}_{3}}^{2 -}\right]}$ (Expression 3)
[Expression 4] $Cs = \sqrt{\frac{{K}_{sp}}{α}}$ (Expression 4)

From Expression 4, it can be seen that the solubility of the carbonate is correlated with α, which is the fraction (abundance ratio) of carbonate ions with respect to the total carbon dioxide concentration in the aqueous solution. Since the value of α exhibits the pH dependence as shown in FIG. 2 described above, the solubility of the carbonate also exhibits the pH dependence.

In addition, by adjusting the pH of the aqueous solution, a hydroxide is generated simultaneously with the carbonate, so that a solubility of the hydroxide generated from the divalent metal ion is also considered.

A solubility product Kₛₚ of a hydroxide composed of a divalent metal ion (M₂⁺) and a hydroxide ion (OH⁻) is expressed by Expression 5.
[Expression 5] ${K}_{sp} = \left[{M}^{2 +}\right] {\left[{OH}^{-}\right]}^{2}$ (Expression 5)

Here, taking the logarithm of Expression 5, it is expressed as in Expression 6.
[Expression 6] $log {K}_{sp} = log \left[{M}^{2 +}\right] + 2 log \left[{OH}^{-}\right]$ (Expression 6)

The logarithm of the hydroxide ion concentration in Expression 6 is expressed as shown in Expression 7 using pH.
[Expression 7] $log \left[{OH}^{-}\right] = - 14 + pH$ (Expression 7)

Here, the solubility product Kₛₚ is a characteristic value (constant), and the divalent metal ion concentration in Expression 5 corresponds to the solubility of the hydroxide. Therefore, when Expression 7 is substituted into Expression 6 and the resulting equation is rearranged so that the logarithm of the divalent metal ion concentration is on the left-hand side, it can be seen that the logarithm of the solubility of the hydroxide correlates with pH.

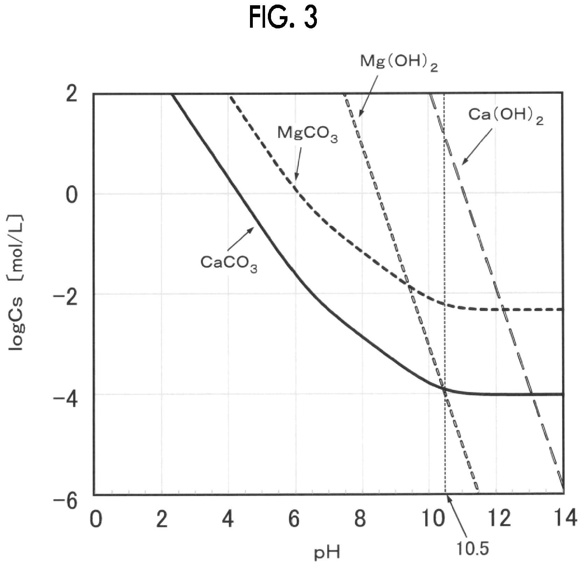

FIG. 3 is a graph showing the relationship between the pH of the aqueous solution and the solubility (logarithm) of carbonates and hydroxides generated from divalent metal ions (calcium ions and magnesium ions).

More specifically, FIG. 3 shows the pH dependence of the solubility (logarithm) of calcium carbonate, magnesium carbonate, calcium hydroxide, and magnesium hydroxide, using calcium ions and magnesium ions as the divalent metal ions.

As shown in FIG. 3, when the pH exceeds 10.5, the solubility of magnesium hydroxide becomes the lowest, but when the pH is 10.5 or less, the solubility of calcium carbonate becomes the lowest.

That is, by carrying out the carbonate precipitation reaction in the reaction unit 10 at a pH of 10.5 or less, calcium carbonate can be preferentially precipitated even in a case where a plurality of divalent metal ions are present. As a result, it is easier to reduce the cost associated with the preparation and procurement of the solution that can be used as the divalent metal ion aqueous solution. In particular, with respect to solutions that contain carbon dioxide and divalent metal ions dissolved from the beginning and can be procured at low cost, such as seawater, river water, tap water, pure water, drainage/wastewater from factories, and leachate from landfills, it is possible to preferentially precipitate the calcium carbonate by simple means of pH adjustment.

Although not shown in FIG. 3, when both calcium ions and magnesium ions are present, dolomite (CaMg(CO₃)₂) may be generated as the carbonate. Here, even when the solubility of dolomite is lower than that of calcium carbonate in the entire pH range, the reaction unit 10 only needs to proceed the carbonate precipitation reaction under conditions under which the calcium carbonate preferentially precipitates (pH of 10.5 or less).

As will be described later, the evaluation system 100A in the present embodiment evaluates the carbon dioxide fixation amount based on the calcium ion concentrations before and after the reaction in the reaction unit 10, and evaluates the carbon dioxide fixation amount using the difference between the total amount of calcium ions before the reaction and the total amount of calcium ions after the reaction. Therefore, both the amount of calcium ions used in the precipitation reaction of dolomite and the amount of calcium ions used in the precipitation reaction of calcium carbonate are included in the total amount of calcium ions used during the precipitation reaction of the carbonate, and thus do not affect the evaluation of the carbon dioxide fixation amount.

The first measurement unit 20 is for measuring the calcium ion concentration before the reaction. More specifically, the first measurement unit 20 measures, with respect to the calcium ion concentration in the solution before introduction into the reaction unit 10, not the calcium concentration regardless of the form in which calcium is present, but the free calcium ion concentration. That is, the first measurement unit 20 determines the total amount of calcium ions present as ions before the carbonate precipitation reaction.

Examples of the first measurement unit 20 of the present embodiment include a measuring instrument capable of measuring the calcium ion concentration in the line L1 provided upstream of the reaction unit 10. Examples of such a measuring instrument include those performing colorimetric analysis and spectroscopic analysis using a Ca²⁺ detection reagent, and those using an ion-selective electrode.

The second measurement unit 30 is for measuring the calcium ion concentration after the reaction. More specifically, the second measurement unit 30 measures, with respect to the calcium ion concentration in the solution discharged from the reaction unit 10, the free calcium ion concentration rather than the calcium concentration regardless of the form in which calcium is present. That is, the second measurement unit 30 determines the total amount of calcium ions present as ions after the carbonate precipitation reaction.

Examples of the second measurement unit 30 of the present embodiment include a measuring instrument capable of measuring the calcium ion concentration in the line L2 provided downstream of the reaction unit 10.

Measurement results of the first measurement unit 20 and the second measurement unit 30 are input to the calculation unit 40.

It is sufficient that the first measurement unit 20 and the second measurement unit 30 are only able to measure the calcium ion concentrations before and after the reaction, and they may be ones in which the measuring instruments are permanently installed for the lines L1 and L2 as shown in FIG. 1, but are not limited thereto. For example, the first measurement unit 20 and the second measurement unit 30 may be measuring instruments detachably provided to the lines L1 and L2 so that measurement is possible only when necessary. Moreover, the first measurement unit 20 and the second measurement unit 30 may measure the calcium ion concentration for samples taken from the lines L1 and L2, instead of providing the measuring instruments on the lines L1 and L2.

Here, in the evaluation system 100A according to the present embodiment, the first measurement unit 20 and the second measurement unit 30 are not limited to being provided independently as shown in FIG. 1.

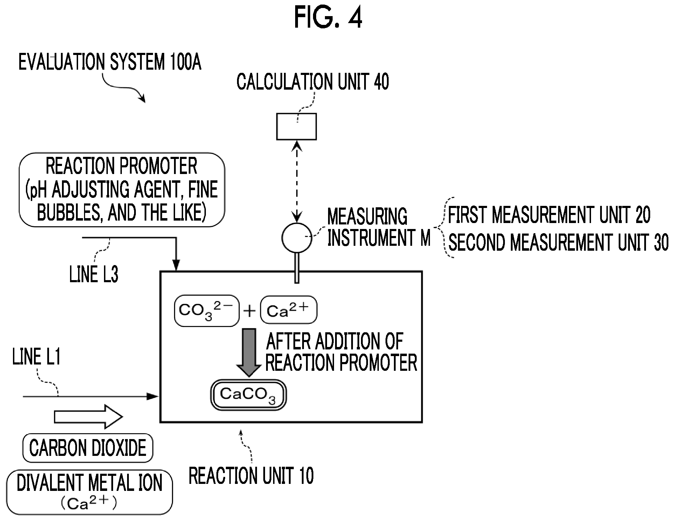

FIG. 4 is a schematic explanatory diagram showing another aspect of the evaluation system 100A according to the present embodiment.

As shown in FIG. 4, another aspect of the evaluation system 100A according to the present embodiment includes a single measuring instrument M provided in the reaction unit 10, which is capable of measuring the calcium ion concentration and serves as both the first measurement unit 20 and the second measurement unit 30. In addition, as one of the means for causing and promoting the carbonate precipitation reaction in the reaction unit 10, another aspect includes a line L3 for introducing a reaction promoter into the reaction unit 10, and the calcium ion concentration in the reaction unit 10 before and after addition of the reaction promoter is measured by the measuring instrument M. Accordingly, the calcium ion concentration before the addition of the reaction promoter, measured by the measuring instrument M, corresponds to the calcium ion concentration before the reaction measured by the first measurement unit 20, whereas the calcium ion concentration after the addition of the reaction promoter, measured by the measuring instrument M, corresponds to the calcium ion concentration after the reaction measured by the second measurement unit 30.

Here, examples of the reaction promoter introduced into the reaction unit 10 through the line L3 to cause and promote the carbonate precipitation reaction include a pH adjusting agent and fine bubbles for forming an extremely small gas-liquid interfacial reaction field.

It is sufficient that a timing of measuring the calcium ion concentration by the measuring instrument M is a timing corresponding to before and after the carbonate precipitation reaction; and in addition to before and after the addition of the reaction promoter through line L3 shown in FIG. 4, measurement of the calcium ion concentration by the measuring instrument M may also be performed before and after application of means for promoting the carbonate precipitation reaction (such as concentration of the aqueous solution).

The calculation unit 40 is for quantifying the amount of fixed carbon dioxide based on the measurement results of the first measurement unit 20 and the second measurement unit 30.

More specifically, the calculation unit 40 determines the total amount of calcium ions used in the carbonate precipitation reaction in the reaction unit 10 from the difference in the calcium ion concentrations obtained by the first measurement unit 20 and the second measurement unit 30.

Since the first measurement unit 20 and the second measurement unit 30 measure the free calcium ion concentrations, the difference in the calcium ion concentrations (obtained by subtracting the total amount of calcium ions before the reaction from the total amount of calcium ions after the reaction) corresponds to the total amount of calcium ions used during the carbonate precipitation reaction.

Because the total amount of calcium ions correlates with the amount of calcium carbonate generated, and because calcium carbonate preferentially precipitates in the reaction unit 10, the calculation unit 40 determines the amount of calcium carbonate generated from the total amount of calcium ions used in the carbonate precipitation reaction, and further converts the amount into a carbon dioxide fixation amount, thereby enabling quantification of the carbon dioxide fixation amount.

Although the calculation unit 40 may, for example, include calculations and operations performed by a worker, it is preferable to use a computing device having a data input/output function for acquiring information, in which a processor such as a CPU executes a program for performing calculations relating to the conversion into the carbon dioxide fixation amount. As a result, it is possible to evaluate the carbon dioxide fixation amount quickly and accurately.

In the related art, in order to perform a quantitative evaluation of how much carbon dioxide can be fixed through a carbonate precipitation reaction, it is necessary to separate and recover all of the precipitated carbonate as a solid content and measure the weight of the separated and recovered solid content. However, in this case, in order to separate and recover the carbonate as a solid content, it is necessary to perform an operation relating to crystal growth of the carbonate, which increases the cost associated with the use of chemicals and the time required for crystal growth. In particular, in a case where fine crystals of the carbonate precipitate in the carbonate precipitation reaction, although fixation of carbon dioxide has been achieved as long as the carbonate has precipitated, the difficulty in recovering the carbonate as a solid content makes it impossible to evaluate the carbon dioxide fixation amount.

In contrast, in the evaluation system 100A according to the present embodiment, by preferentially precipitating a specific carbonate (calcium carbonate) as the carbonate generated by the carbonate precipitation reaction, the variation (difference) in the calcium ion concentrations before and after the reaction correlates with the amount of carbonate generated, and the amount of carbonate generated can further be converted into the carbon dioxide fixation amount. That is, the amount of carbonate generated can be readily determined without separating and recovering the carbonate as a solid content, and can further be appropriately evaluated as the carbon dioxide fixation amount.

Therefore, in the evaluation system 100A according to the present embodiment, simple quantification of the amount of fixed carbon dioxide and appropriate evaluation of the carbon dioxide fixation amount can be achieved without performing an operation relating to crystal growth. In addition, it is possible to reduce a cost associated with the use of chemicals and shorten a time required for the crystal growth of the carbonate, thereby reducing a work burden relating to the evaluation of the carbon dioxide fixation amount.

Moreover, even in a case where a carbonate precipitates as fine crystals in the carbonate precipitation reaction, the evaluation system 100A according to the present embodiment can evaluate that carbon dioxide fixation has been achieved without directly measuring the weight of the carbonate, thereby enabling the carbon dioxide fixation amount to be evaluated with high accuracy. An example of the case where the carbonate precipitates as fine crystals in the carbonate precipitation reaction is a case where a degree of supersaturation of ions required for the carbonate precipitation reaction is high, so that fine crystals serving as nuclei are readily generated. More specifically, examples thereof include a carbonate precipitation reaction in an extremely small gas-liquid interfacial reaction field using fine bubbles of carbon dioxide gas, and a carbonate precipitation reaction by concentration using a semipermeable membrane, which will be described later.

### [Second Embodiment]

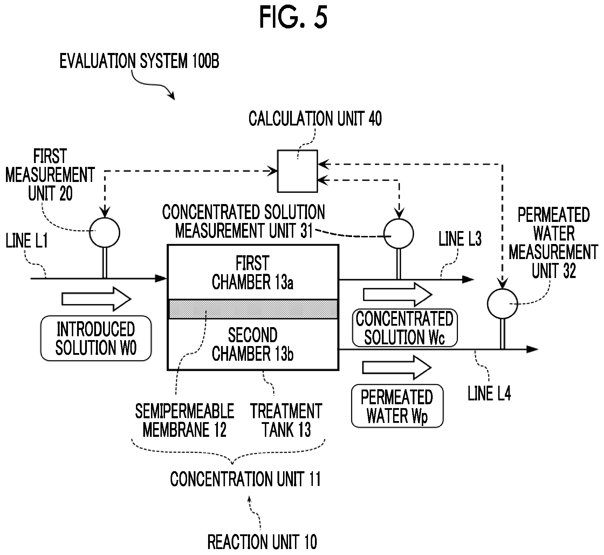

FIG. 5 is a schematic explanatory diagram showing a system for evaluating a carbon dioxide fixation amount according to a second embodiment of the present invention.

A system 100B for evaluating a carbon dioxide fixation amount according to the present embodiment (hereinafter, also simply referred to as the "evaluation system 100B") is the evaluation system 100A according to the first embodiment described above, further including, as the reaction unit 10, a concentration unit 11 configured to generate a concentrated solution Wc by osmosis using a semipermeable membrane 12, and, as the second measurement unit 30, a concentrated solution measurement unit 31 configured to measure a calcium ion concentration in the concentrated solution Wc and a permeated water measurement unit 32 configured to measure a calcium ion concentration in permeated water Wp that has passed through the semipermeable membrane 12. The calculation unit 40 in the evaluation system 100B receives, as the measurement result of the second measurement unit 30, a combined result of a measurement result of the concentrated solution measurement unit 31 and a measurement result of the permeated water measurement unit 32.

Descriptions of components in the evaluation system 100B according to the present embodiment, which are identical to those of the evaluation system 100A in the first embodiment, are not repeated.

In the evaluation system 100B according to the present embodiment, the reaction unit 10 includes the concentration unit 11 configured to perform concentration by osmosis using the semipermeable membrane 12, and the carbonate precipitation reaction is caused to proceed by concentrating, in the concentration unit 11, an aqueous solution containing carbon dioxide and divalent metal ions, which has been introduced into the reaction unit 10.

Hereinafter, the present embodiment will be described using an example in which the carbon dioxide and divalent metal ions introduced through the line L1 are in the form of an aqueous solution in which both are dissolved in advance (hereinafter, referred to as "introduced solution WO").

The concentration unit 11 in the present embodiment includes, for example, a semipermeable membrane 12 and a treatment tank 13 whose interior is partitioned by the semipermeable membrane 12.

The treatment tank 13 may be any tank capable of storing the introduced solution WO introduced through the line L1, and its material, shape, and size are not particularly limited. In addition, the treatment tank 13 is divided into a first chamber 13a and a second chamber 13b, separated by the semipermeable membrane 12 described later. In this case, the introduced solution WO is introduced into the first chamber 13a side, where the concentrated solution Wc is generated. Meanwhile, an aqueous solution containing neither carbon dioxide nor calcium ions is introduced into the second chamber 13b side (not shown), allowing the permeated water Wp that has passed through the semipermeable membrane 12 to flow into the second chamber 13b side. Next, the concentrated solution Wc is discharged out of the system through the line L3 provided on the first chamber 13a side, while the permeated water Wp (including the aqueous solution originally introduced into the second chamber 13b side) is discharged out of the system through a line L4 provided on the second chamber 13b side.

As the semipermeable membrane 12, a membrane is used that allows water molecules in an aqueous solution (the introduced solution WO in the present embodiment) to permeate and that prevents, or makes difficult, permeation of ions that are required for the carbonate precipitation reaction and contained in the aqueous solution (the introduced solution WO in the present embodiment), such as the carbonate ions and the divalent metal ions.

By using the semipermeable membrane 12, the introduced solution WO in which carbon dioxide and divalent metal ions are dissolved is concentrated by allowing water molecules to permeate therethrough and thereby reducing the amount of water, while the carbonate ions present in the introduced solution WO are prevented from permeating or are allowed to permeate only with difficulty, thereby increasing the carbonate ion concentration. As a result, on the first chamber 13a side (the concentrated solution Wc side), the carbonate ions and the divalent metal ions react efficiently, so that generation and precipitation of carbonate efficiently proceed.

Furthermore, in a case where the introduced solution WO having a pH of more than 7 is concentrated using the semipermeable membrane 12, the concentrated solution Wc concentrated by the semipermeable membrane 12 has a reduced amount of water molecules, and the concentration of hydroxide ions increases. In other words, since the pH of the concentrated solution Wc increases, the carbonate ions are more readily generated, as shown in FIG. 2 described above, thereby allowing generation and precipitation of carbonate to proceed more efficiently. It is also preferable that, in the reaction unit 10 of the present embodiment, the carbonate precipitation reaction is carried out at a pH of 10.5 or less under conditions under which calcium carbonate preferentially precipitates.

Additionally, the semipermeable membrane 12 is preferably permeable to carbon dioxide gas dissolved in the aqueous solution (the introduced solution WO in the present embodiment).

In a case where the semipermeable membrane 12 is permeable to the carbon dioxide gas dissolved in the introduced solution WO, the concentration of carbon dioxide gas does not increase on the concentrated solution Wc side (first chamber 13a side) where the introduced solution WO is concentrated. Consequently, unintended lowering of the pH of the concentrated solution Wc, caused by the generation of hydrogen ions due to dissociation of carbon dioxide gas contained in the introduced solution WO, can be suppressed, making it easier to maintain the pH range in which the carbonate ions are readily generated and the calcium carbonate preferentially precipitates.

In particular, in a case where an aqueous solution having a pH of more than 7 is used as the introduced solution WO, a synergistic effect between the pH increase caused by an increase in hydroxide ion concentration and suppression of an increase in carbon dioxide gas concentration facilitates generation of carbonate ions.

By providing the concentration unit 11 as the reaction unit 10 in the present embodiment and concentrating the introduced solution WO using the semipermeable membrane 12, the aqueous solution can be concentrated with less energy and the carbonate precipitation reaction can be caused to proceed, as compared with a case where the aqueous solution is concentrated by heating and evaporation in conventional carbonate precipitation (such as a method called simple distillation).

Furthermore, by concentrating the introduced solution WO with the concentration unit 11, which serves as the reaction unit 10 in the present embodiment, the concentration of ions required for the carbonate precipitation reaction increases in the vicinity of the semipermeable membrane 12, so that a state of high supersaturation is maintained. In this case, while many fine crystals serving as nuclei for carbonate crystals are generated, the crystal growth rate decreases. Therefore, in order to recover these carbonate crystals as a solid content by a separation operation such as filtration, use of chemicals and time for crystal growth are required. However, in the evaluation system 100B according to the present embodiment, the recovery of the carbonate crystals as a solid content is not required, and even in a case where fine crystals of carbonate are generated in the reaction unit 10 of the present embodiment, simple quantification and appropriate evaluation can be performed with respect to the carbon dioxide fixation amount.

In the concentration unit 11 of the present embodiment, it is preferable to introduce salt-containing solutions into both the concentration side (the first chamber 13a side) and the dilution side (the second chamber 13b side) of the treatment tank 13. In addition, it is more preferable that the salt concentration of the solution introduced into the dilution side is the same as the salt concentration of the introduced solution WO introduced into the concentration side. It is still more preferable that the salt concentration of the solution introduced into the dilution side is higher than the salt concentration of the introduced solution WO introduced into the concentration side.

By introducing the salt-containing solution into the dilution side, the difference between the salt concentration of the introduced solution WO introduced into the concentration side and the salt concentration of the solution introduced into the dilution side is reduced, so that the introduced solution WO can be concentrated with less energy and the carbonate precipitation reaction relating to fixation of carbon dioxide can be caused to proceed. Furthermore, by setting the salt concentration of the solution introduced into the dilution side higher than the salt concentration of the introduced solution WO on the concentration side, osmotic pressure is generated, so that the introduced solution WO on the concentration side can be concentrated with less energy.

The reaction unit 10 in the present embodiment may optionally include pressurizing means as the concentration unit 11. The pressurizing means is not particularly limited as long as it is means for applying pressure to the introduced solution WO of the first chamber 13a and the semipermeable membrane 12. Accordingly, concentration can be performed without adjusting the salt concentration of each of the solutions introduced into the treatment tank 13.

In addition, the pressurizing means may be used in combination with adjusting the salt concentration of each solution introduced into the treatment tank 13. Accordingly, it is possible to reduce energy consumption of the pressurizing means together with reducing the cost associated with the use of chemicals necessary for salt concentration adjustment.

In a case where the introduced solution WO contains other salts not involved in the carbonate precipitation reaction, has a pH of 7 or more, and contains carbonate ions, a membrane may be used as the semipermeable membrane 12 that allows water molecules, carbon dioxide gas, and hydrogen ions to permeate and that does not allow, or allows only with difficulty, permeation of other ions required for the carbonate precipitation reaction (excluding hydrogen ions). In this case, because the hydrogen ions can be prevented from remaining in the first chamber 13a side (the concentrated solution Wc side) and increasing in concentration, a decrease in pH can be suppressed. Consequently, the carbonate ion concentration in the concentrated solution Wc increases, facilitating the generation and precipitation of the carbonate.

Even in the evaluation system 100B according to the present embodiment, the first measurement unit 20 and the second measurement unit 30 measure the calcium ion concentrations before and after the reaction to determine the total amounts of calcium ions present as ions before and after the carbonate precipitation reaction.

Since the first measurement unit 20 in the present embodiment is the same as that described above for the evaluation system 100A, the description thereof is not repeated.

The second measurement unit 30 in the present embodiment includes the concentrated solution measurement unit 31 configured to measure the calcium ion concentration on the concentrated solution Wc side, and the permeated water measurement unit 32 configured to measure the calcium ion concentration on the permeated water Wp side after permeation through the semipermeable membrane 12. More specifically, as shown in FIG. 5, examples thereof include providing, as the concentrated solution measurement unit 31, a measuring instrument capable of measuring a calcium ion concentration on the line L3 provided downstream of the reaction unit 10, and providing, as the permeated water measurement unit 32, a measuring instrument capable of measuring a calcium ion concentration on the line L4 provided downstream of the reaction unit 10.

Because the concentrated solution Wc, which is produced by using the semipermeable membrane 12 and discharged from the system through the line L3, is obtained as a product after the carbonate precipitation reaction, by providing the concentrated solution measurement unit 31 and measuring the calcium ion concentration contained in the concentrated solution Wc, it is possible to accurately and easily determine the calcium ion concentration after the reaction. As a result, the accuracy of quantification of the amount of fixed carbon dioxide is also improved, enabling a more appropriate evaluation.

The second measurement unit 30 performs measurement by at least the concentrated solution measurement unit 31, and the permeated water measurement unit 32 may be omitted.

Whether the permeated water measurement unit 32 can be omitted depends on ion permeability of the semipermeable membrane 12. In a case where a membrane that is completely impermeable to calcium ions is used as the semipermeable membrane 12, the total amount of calcium ions after the reaction can be determined by measuring the calcium ion concentration in the concentrated solution Wc as the second measurement unit 30, so that the permeated water measurement unit 32 can be omitted. Conversely, in a case where a membrane that is less permeable to calcium ions is used as the semipermeable membrane 12, a portion of the calcium ions remaining in excess in the carbonate precipitation reaction proceeding in the reaction unit 10 moves to the dilution side (the second chamber 13b side). In this case, in order to determine the total amount of calcium ions after the reaction, it is necessary, as the second measurement unit 30, to measure the calcium ion concentration in the permeated water Wp, in addition to measuring the calcium ion concentration in the concentrated solution Wc. Accordingly, the permeated water measurement unit 32 cannot be omitted, and functions as part of the second measurement unit 30.

The measurement results from the first measurement unit 20 and the second measurement unit 30 (the concentrated solution measurement unit 31 and the permeated water measurement unit 32) are input to the calculation unit 40.

The calculation unit 40 is for quantifying the amount of fixed carbon dioxide based on the measurement results of the first measurement unit 20 and the second measurement unit 30. Here, since the content relating to quantification of the carbon dioxide fixation amount is the same as that described above for the evaluation system 100A, description thereof is omitted.

In the evaluation system 100B according to the present embodiment, as in the evaluation system 100A described above, the amount of carbonate generated can be readily determined without separating and recovering the carbonate as a solid content, and can further be appropriately evaluated as the carbon dioxide fixation amount.

In addition, in the evaluation system 100B, since the concentration is performed by osmosis using a semipermeable membrane, the carbonate precipitation reaction can proceed to obtain the carbonate with less energy, compared to a case where the solution is concentrated by heating and evaporation. In this case, fine crystals may precipitate as carbonate; but, as described above, in evaluating the carbon dioxide fixation amount by the evaluation system 100B, it is not necessary to recover the carbonate as a solid content, so that simple quantification and appropriate evaluation can be performed with respect to the carbon dioxide fixation amount.

The above-described embodiments are merely illustrative examples of the system and method for evaluating a carbon dioxide fixation amount. The system for evaluating a carbon dioxide fixation amount and the method for evaluating a carbon dioxide fixation amount according to the present invention are not limited to the above-described embodiments, and may be modified without changing the concept set forth in the claims.

Furthermore, the system for evaluating a carbon dioxide fixation amount and the method for evaluating a carbon dioxide fixation amount according to the present invention can be applied to various equipment, facilities, and systems for which quantitative evaluation of the carbon dioxide fixation amount is required. Specifically, examples thereof include facilities that directly recover and separate carbon dioxide from the atmosphere and store the carbon dioxide underground or the like (DACCS systems), carbon dioxide recovery and storage equipment attached to thermal power generation (CCS systems), and carbonate-forming facilities installed on ships or offshore for fixing carbon dioxide using seawater.

### Industrial Applicability

The system for evaluating a carbon dioxide fixation amount and the method for evaluating a carbon dioxide fixation amount according to the present invention enable quantification of the amount of fixed carbon dioxide (carbon dioxide fixation amount) in fixation of carbon dioxide by a carbonate precipitation reaction, and are suitably used for evaluation of the carbon dioxide fixation amount.

Additionally, since crystal growth of the carbonate and direct measurement of the weight of the carbonate are unnecessary, the system for evaluating a carbon dioxide fixation amount and the method for evaluating a carbon dioxide fixation amount according to the present invention are particularly suitable for cases where the carbonate precipitates as fine crystals in the carbonate precipitation reaction.

### Reference Signs List

100A, 100B System for evaluating carbon dioxide fixation amount
10 Reaction unit
11 Concentration unit
12 Semipermeable membrane
13 Treatment tank
13a First chamber
13b Second chamber
20 First measurement unit
30 Second measurement unit
31 Concentrated solution measurement unit
32 Permeated water measurement unit
40 Calculation unit
L1 to L4 Line
M Measuring instrument
WO Introduced solution
Wc Concentrated solution
Wp Permeated water

## Claims

1. A system for evaluating a carbon dioxide fixation amount, comprising:
a reaction unit configured to carry out a carbonate precipitation reaction relating to fixation of carbon dioxide under conditions under which calcium carbonate preferentially precipitates;
a first measurement unit configured to measure a calcium ion concentration before the reaction;
a second measurement unit configured to measure a calcium ion concentration after the reaction; and
a calculation unit configured to quantify an amount of fixed carbon dioxide based on measurement results of the first measurement unit and the second measurement unit.

2. The system for evaluating a carbon dioxide fixation amount according to Claim 1,
wherein, in the reaction unit, the carbonate precipitation reaction is carried out at a pH of 10.5 or less.

3. The system for evaluating a carbon dioxide fixation amount according to Claim 1 or 2,
wherein the reaction unit includes a concentration unit configured to generate a concentrated solution by osmosis using a semipermeable membrane, and
the second measurement unit measures at least a calcium ion concentration on a concentrated solution side.

4. A method for evaluating a carbon dioxide fixation amount, comprising:
a reaction step of carrying out a carbonate precipitation reaction relating to fixation of carbon dioxide under conditions under which calcium carbonate preferentially precipitates;
a first measurement step of measuring a calcium ion concentration before the reaction;
a second measurement step of measuring a calcium ion concentration after the reaction; and
a calculation step of quantifying an amount of fixed carbon dioxide based on measurement results of the first measurement step and the second measurement step.
